# EUROPÄISCHE PATENTSCHRIFT

(11) **EP 3 084 892 B1**
(45) Veröffentlichungstag und Bekanntmachung des Hinweises auf die Patenterteilung: **26.02.2020**
(21) Anmeldenummer: 14809829.6
(22) Anmeldetag: 05.12.2014
(51) Int. Cl.: H01R 9/26, H04Q 1/14, H01R 13/6583, H01R 13/627

(54) **VERTEILERBLOCK UND ERDUNGSADAPTER**
DISTRIBUTOR BLOCK AND GROUNDING ADAPTER
BLOC DE DISTRIBUTION ET ADAPTATEUR AVEC PRISE DE TERRE

(30) Priorität: 16.12.2013 DE 102013226069
(43) Veröffentlichungstag der Anmeldung: 26.10.2016
(73) Patentinhaber: CommScope Technologies LLC, Hickory, NC 28602 (US)
(72) Erfinder: NEUMETZLER, Heiko, 12623 Berlin (DE)
(74) Vertreter: Murgitroyd & Company
(86) Internationale Anmeldenummer: PCT/EP2014/076797
(87) Internationale Veröffentlichungsnummer: WO 2015/091038

(56) Entgegenhaltungen:
- WO-A2-2010/147749
- DE-B3-102004 046 259
- DE-T2- 69 204 773
- DE-U1- 29 703 912
- US-B1- 6 556 411

## Beschreibung

Die Erfindung betrifft einen Verteilerblock sowie einen Erdungsadapter für einen solchen Verteilerblock.

Aus der WO 2012/152300 A1 ist ein Verteileranschlussmodul für die Telekommunikations- und Datentechnik bekannt, wobei das Verteileranschlussmodul ein erstes Teilmodul und ein zweites Teilmodul umfasst, wobei das erste Teilmodul und das zweite Teilmodul jeweils Kontaktelemente aufweisen. Die Kontaktelemente weisen jeweils einen elektrischen Anschlusskontakt und einen Schnittstellenkontakt auf, wobei die Schnittstellenkontakte des ersten Teilmoduls mit den Schnittstellenkontakten des zweiten Teilmoduls miteinander elektrisch verbunden sind oder die Schnittstellenkontakte des ersten Teilmoduls mit den Schnittstellenkontakten eines weiteren Teilmoduls und die Schnittstellenkontakte des zweiten Teilmoduls mit den Schnittstellenkontakten eines weiteren Teilmoduls verbunden sind, wobei die weiteren Teilmodule zwischen dem ersten und dem zweiten Teilmodul angeordnet sind. Das erste und zweite Teilmodul weisen jeweils zwei Einsteckkanäle auf, in die Aufnahmeelemente einer Montagewanne eintauchen können. Die Montagewanne weist dabei eine Rückwand und zwei Seitenwände auf, wobei die der Rückwand abgewandten Stirnflächen der Seitenwände die Aufnahmeelemente aufweisen.

Aus der DE 297 24 462 U1 ist eine Anschluss-, Trenn- oder Schaltleiste für die Telekommunikations- und Datentechnik mit Kontaktelementen und mit einer Haltevorrichtung bekannt. Dabei sind in zwei zueinander abgewinkelt angeordneten Isolierkörper über zwei Ebenen ausgeformte Kontaktelemente angeordnet, die zwei Reihen von zueinander abgewinkelten Klemmleisten bilden, wobei einer der Isolierkörper Befestigungselemente aufweist. Dabei ist die Haltevorrichtung als Montagewanne mit einer Rückwand und zwei Seitenwänden ausgebildet. Die Seitenwände weisen jeweils zwei Reihen von rechteckförmigen Öffnungen auf, wobei die Leiste zwei unterschiedliche Befestigungsnnittel aufweist. Dabei rasten die ersten Befestigungsmittel in einer ersten Raststellung in die Öffnungen der ersten Reihe und die zweiten Befestigungsmittel in einer zweiten Raststellung in die Öffnungen der zweiten Reihe. Dabei ist die zweite Raststellung die Endstellung der beschalteten Leisten. Dabei sind die der Rückwand abgewandten Stirnseiten der Seitenwände gerade. Eine solche mit Verteileranschlussmodulen (als Oberbegriff für Anschluss-, Schalt- oder Trennleisten) bestückte Montagewanne stellt einen Verteilerblock dar. Derartige Verteilerblöcke sind inn großen Umfang in Telekommunikationsanlagen verbaut.

Die in der WO 2012/152300 A1 offenbarten Verteileranschlussmodule bzw. aus diesen zusammengesetzte Verteilerblöcke weisen eine höhere Packungsdichte auf. Allerdings erfordert dies den vollständigen Austausch der Verteilerblöcke, was kostenspielig und aufwendig ist. Weitere Lösungen des Standes der Technik sind in der DE 692 04 773 T2, der DE 297 03 912 U1, der WO 2010/147749 A2, der US 6 556 411 B1 und der DE 10 2004 046259 B3 offenbart.

Der Erfindung liegt daher das technische Problem zugrunde, einen Verteilerblock mit Verteileranschlussmodulen mit Einsteckkanälen zu schaffen, der kostengünstig in eine vorhandene Infrastruktur integriert werden kann. Ein weiteres technisches Problem besteht darin, einen Erdungsadapter zu schaffen, der in einen solchen Verteilerblock eingesetzt werden kann.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu weist der Verteilerblock für die Telekommunikations- und Datentechnik ein Trägersystem in Form einer Montagewanne mit zwei Seitenwänden und einer Rückwand auf sowie mindestens ein Verteileranschlussmodul, wobei das Verteileranschlussmodul Einsteckkanäle aufweist. Die Seitenwände der Montagewanne weisen jeweils mindestens eine Reihe von rechteckförmigen Öffnungen auf, wobei die der Rückwand abgewandten Stirnseiten der Seitenflächen gerade sind. Je Verteileranschlussmodul sind zwei Erdungsadapter vorgesehen, wobei der Erdungsadapter jeweils eine Kontaktzunge und ein Klemmelement aufweist, wobei die Kontaktzunge in einem der Einsteckkanäle des Verteileranschlussmoduls geführt ist und das Klemmelement in einer der rechteckförmigen Öffnungen einer der Seitenwände geklemmt ist. Mittels der Erdungsadapter wird somit eine Montagewanne, wie sie beispielsweise aus der DE 297 24 462 U1 bekannt ist, in eine Montagewanne für Verteileranschlussmodule, wie sie aus der WO 2012/152300 A1 bekannt sind, umgewandelt. Dies erlaubt den Einsatz derartiger Verteileranschlussmodule auf bereits installierte Montagewannen, sodass durch die Weiterverwendung der Montagewannen Kosten gespart werden können. Des Weiteren sind gemischte Verteilerblöcke möglich, wo sowohl Leisten wie aus der DE 297 24 462 U1 als such der WO 2012/152300 A1 gemeinsam verwendet werden. Dabei übernimmt das Klemmelement sowohl die mechanische als such elektrische Anbindung des Erdungsadapters an die Montagewanne. Dabei sei angemerkt, dass der Begriff Klemmen auch ein Einrasten mit einschließt.

Das Klemmelement umfasst eine gebogene Lasche mit zwei Einschnitten, wodurch zwei Flügel freigeschnitten sind, die Anschlagkanten an einer Oberkante der Öffnung bilden. Dabei wird die gebogene Lasche in die Öffnung gedrückt, wobei die Flügel eine anschließende Bewegung nach oben verhindern.

Dabei kann das Klemmelement von der Innenseite oder Außenseite in die Öffnung der Seitenwand geklemmt werden.

In einer weiteren Ausführungsform ist das Klemmelement von der Innenseite in die Öffnung der Seitenwand geklemmt, wobei die Erdungsadapter mindestens ein weiteres Halteelement aufweist, das an der Außenseite der Seitenwand anliegt. Hierdurch ist der Erdungsadapter selbst haltend an der Montagewanne befestigt und kann ohne Verteileranschlussmodul vormontiert werden. Prinzipiell kann das Halteelement innen auch bei einem Klemmelement außen verwendet werden. Allerdings wird das Klemmen von der Außenseite bevorzugt verwendet, wenn aufgrund der Abmessungen des Verteileranschlussmoduls an der Innenseite kein weiterer Platz für Halte- oder Klemmelemente vorhanden ist. In diesem Fall ist der Erdungsadapter nicht selbst haltend und muss daher zunächst in das Verteileranschlussmodul eingesteckt werden.

In einer weiteren Ausführungsform entspricht die Breite des Klemmelements der Breite der Öffnung in der Seitenwand. Dies hat den Vorteil, dass die Verteileranschlussmodule zur Montagewanne definiert justiert werden.

In einer weiteren Ausführungsform weist die Kontaktzunge eine Öffnung auf, in der ein Rastelement in dem Einsteckkanal des Verteileranschlussmoduls einrastet. Die Öffnung weist vorzugsweise eine rechteckförmige Grundöffnung auf, an die sich unmittelbar eine weitere schmalere rechteckförmige Öffnung anschließt, sodass sich eine Anschlagkante für ein Rastelement in einem Einsteckkanal des Verteileranschlussmoduls ausbildet.

Hinsichtlich der Ausbildung des Erdungsadapters in Alleinstellung wird vollinhaltlich auf die vorangegangenen Ausführungen Bezug genommen.

Die Erfindung wird nachfolgend anhand bevorzugter Ausführungsbeispiele näher erläutert. Die Fig. zeigen:
- Fig. 1a, 1b: eine perspektivische Darstellung eines Erdungsadapters in einer ersten Ausführungsform,
- Fig. 2: eine perspektivische Unteransicht auf ein Verteileranschlussmodul mit eingesteckten Erdungsadaptern,
- Fig. 3: eine Detaildarstellung aus Fig. 2,
- Fig. 4: eine teilweise aufgeschnittene Darstellung eines Verteileranschlussmoduls im aufgesteckten Zustand auf einer Montagewanne,
- Fig. 5: eine Detaildarstellung eines Klemmelements in einer Öffnung,
- Fig. 6: eine perspektivische Darstellung auf einen Teil eines Verteilerblocks,
- Fig. 7a, 7b: eine perspektivische Darstellung eines Erdungsadapters in einer zweiten Ausführungsform,
- Fig. 8: eine perspektivische Unteransicht auf ein Verteileranschlussmodul mit eingesteckten Erdungsadaptern,
- Fig. 9: eine Detaildarstellung aus Fig. 8,
- Fig. 10: eine teilweise aufgeschnittene Darstellung eines Verteileranschlussmoduls im aufgesteckten Zustand auf einer Montagewanne,
- Fig. 11: eine Detaildarstellung eines Klemmelements in einer Öffnung und
- Fig. 12: eine perspektivische Darstellung auf einen Teil eines Verteilerblocks.

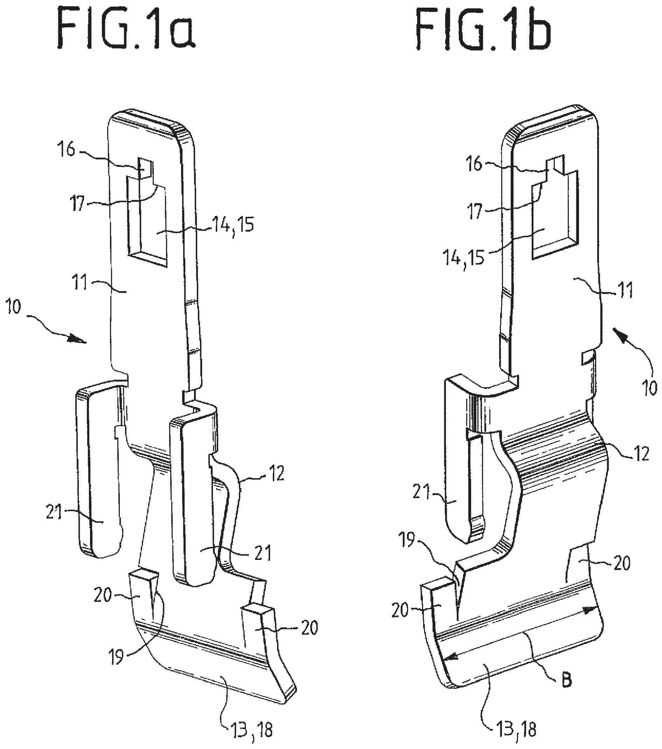

Der Erdungsadapter 10 gemäß der Fig. 1a und 1b weist eine Kontaktzunge 11, ein Mittelteil 12 und ein Klemmelement 13 auf. Die Kontaktzunge 11 weist eine im Wesentlichen rechteckförmige Grundstruktur auf. Des Weiteren weist die Kontaktzunge 11 eine Öffnung 14 auf, die sich aus einer rechteckförmigen Grundöffnung 15 und einer sich unmittelbar mittig anschließenden weiteren schmalen rechteckförmigen Öffnung 16 zusammensetzt, sodass sich jeweils eine Anschlagkante 17 bildet.

Das Klemmelement 13 ist als gebogene Lasche 18 mit zwei Einschnitten 19 ausgebildet, um zwei Flügel 20 freizuschneiden. Das Mittelteil 12 ist ebenfalls gebogen, jedoch ist die Biegung gegenläufig zur Biegung der Lasche 18. Des Weiteren gehen vom Mittelteil 12 zwei Halteelemente 21 ab.

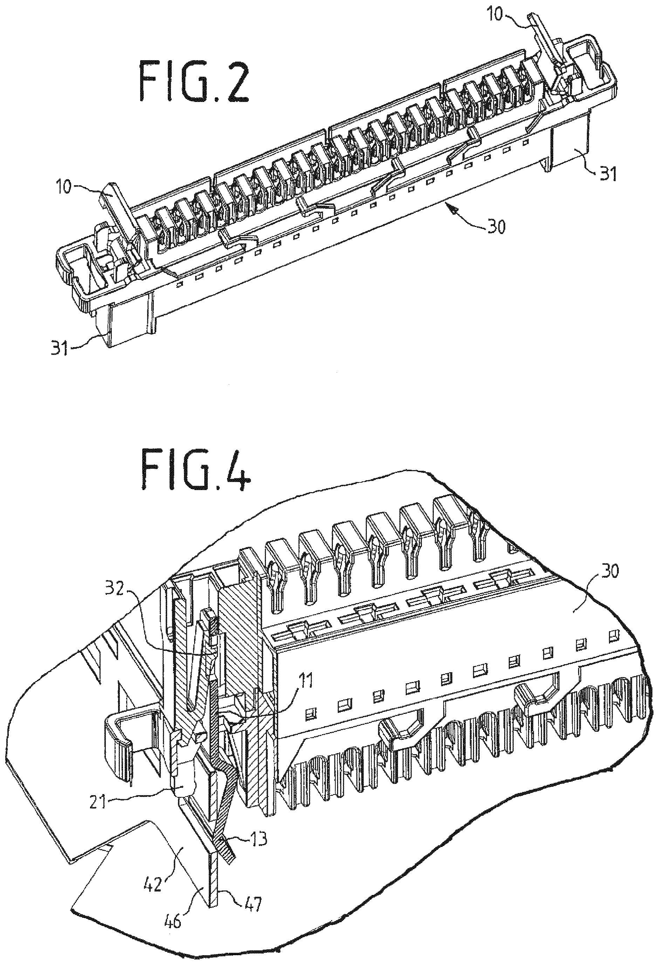

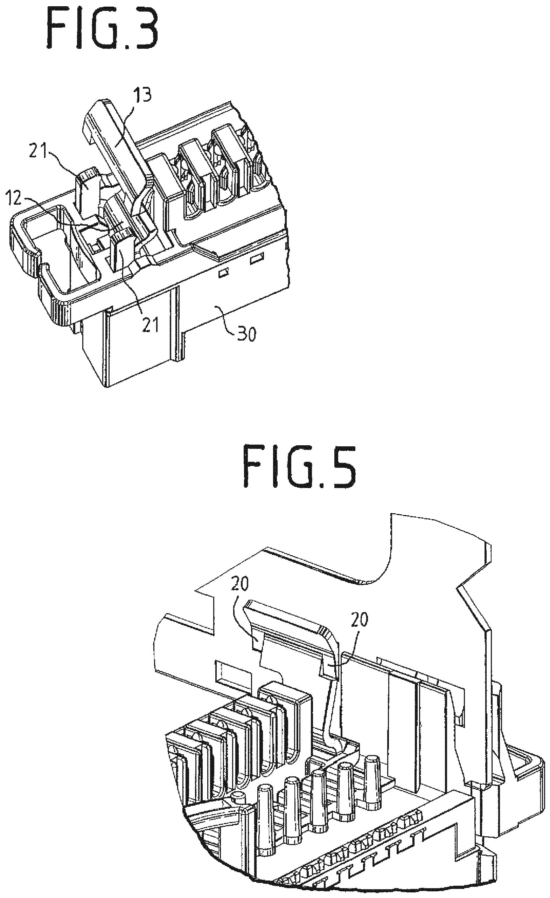

In der Fig. 2 bzw. 3 ist dargestellt, wie zwei Erdungsadapter 10 in die Unterseite eines Verteileranschlussmoduls 30 eingesteckt sind. Dabei werden die Erdungsadapter 10 in Einsteckkanäle des Verteileranschlussmoduls 20 eingesteckt, wobei die Wölbung der Laschen 18 jeweils nach außen in Richtung der schmalen Stirnseiten 31 des Verteileranschlussmoduls 30 gerichtet ist.

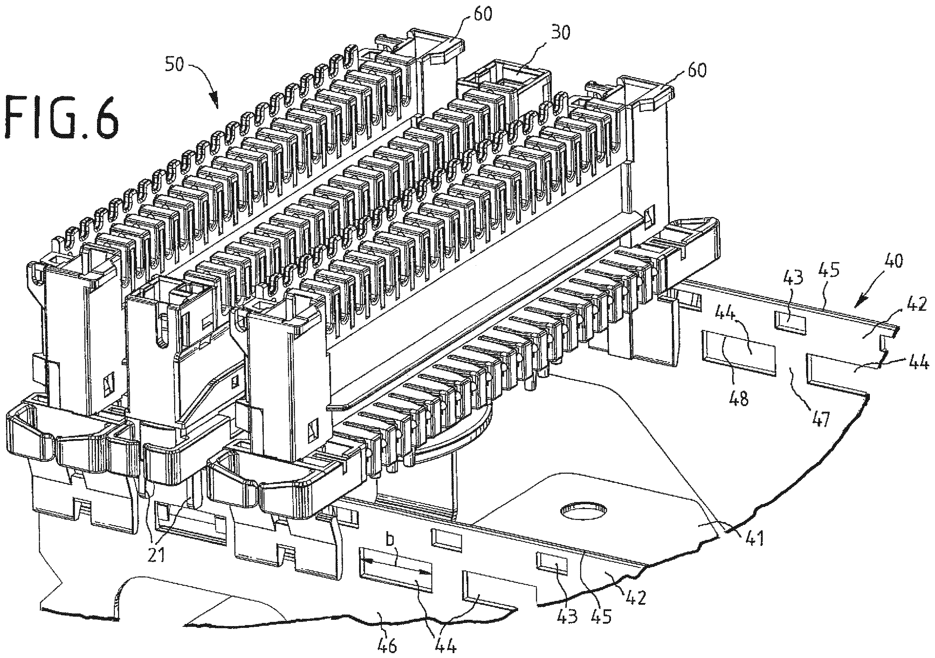

In der Fig. 4 ist dargestellt, wie das Verteileranschlussmodul 30 auf eine Montagewanne 40 aufgesteckt ist. Die Montagewanne 40 weist eine Rückwand 41 und zwei Seitenwände 42 auf, wobei die Montagewanne 40 einen im Wesentlichen U-förmigen Querschnitt aufweist (siehe Fig. 6). Jede Seitenwand 42 weist zwei Reihen von rechteckförmigen Öffnungen 43, 44 auf, wobei für die vorliegende Erfindung nur die größeren Öffnungen 44 von Interesse sind. Die der Rückwand 41 abgewandte Stirnseite 45 der jeweiligen Seitenwand 42 ist gerade. Wie nun in Fig. 4 dargestellt, umgreifen die Halteelemente 21 die Seitenwand 42 an der Außenseite 46 der Seitenwand 42, wohingegen das Klemmelement 13 von der Innenseite 47 in die Öffnung 44 gedrückt wird. Des Weiteren ist dargestellt, wie ein Rastelement 32 im Einsteckkanal in die Öffnung 14 in der Kontaktzunge 11 einrastet. Die Biegung des Mittelteils 12 stützt sich dabei auf dem Verteileranschlussmodul 30 ab. Wie besonders gut in Fig. 5 zu erkennen, ragen die Flügel 20 in die Öffnung 44 hinein, sodass diese bei einer Bewegung des Erdungsadapters 10 nach oben (entsprechend in Fig. 5 nach unten) an eine Oberkante 48 der Öffnung 44 anschlagen.

In der Fig. 6 ist schließlich ein Verteilerblock 50 dargestellt, wobei neben dem Verteileranschlussmodul 30 mit Einsteckkanal jeweils ein Verteileranschlussmodul 60 gemäß der DE 297 24 462 U1 dargestellt ist. Wird nun beispielsweise ein Überspannungsschutzmagazin auf das Verteileranschlussmodul 30 gesteckt, so kann ein Erdkontakt des Magazins die Kontaktzunge 11 in dem Verteileranschlussmodul 30 kontaktieren, sodass eine Masseverbindung zur Montagewanne 40 hergestellt ist.

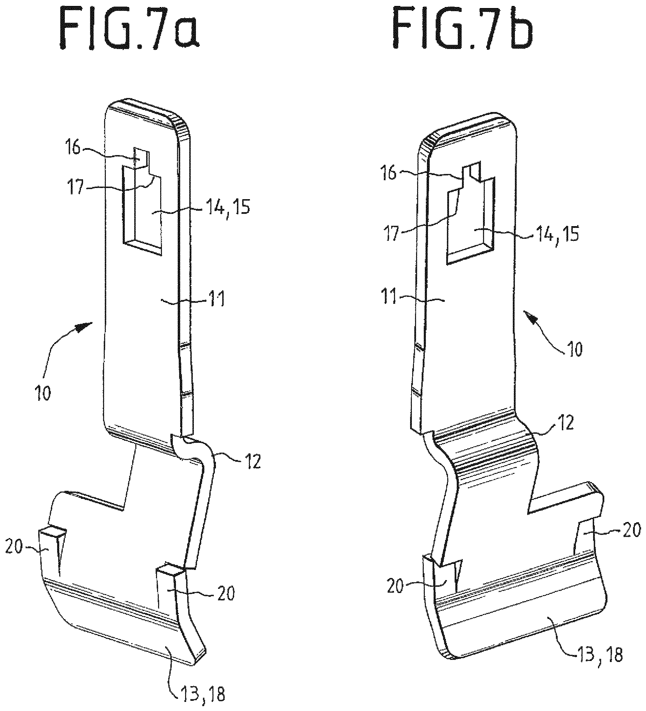

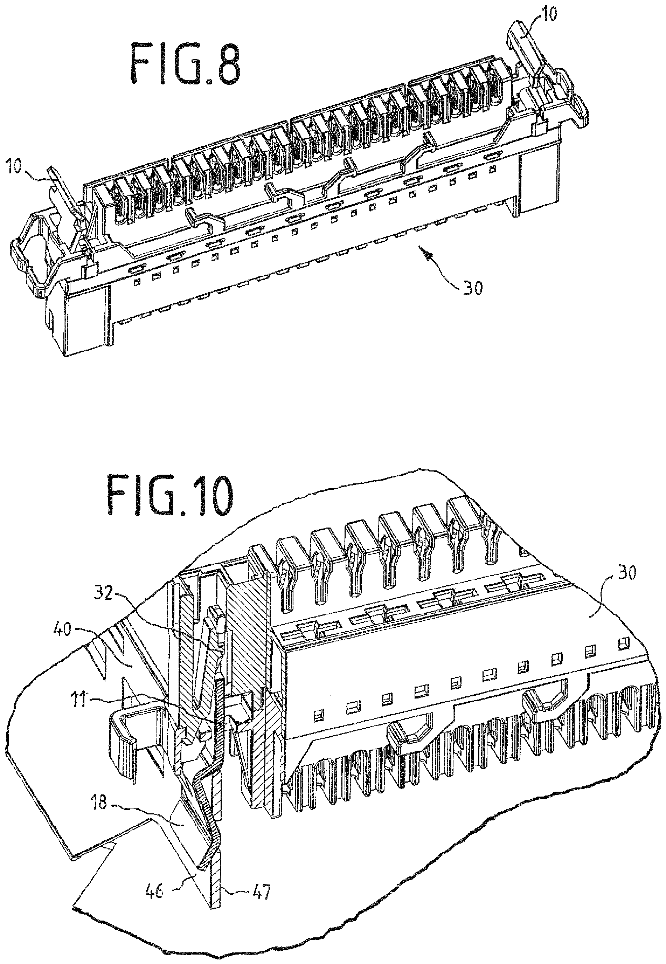

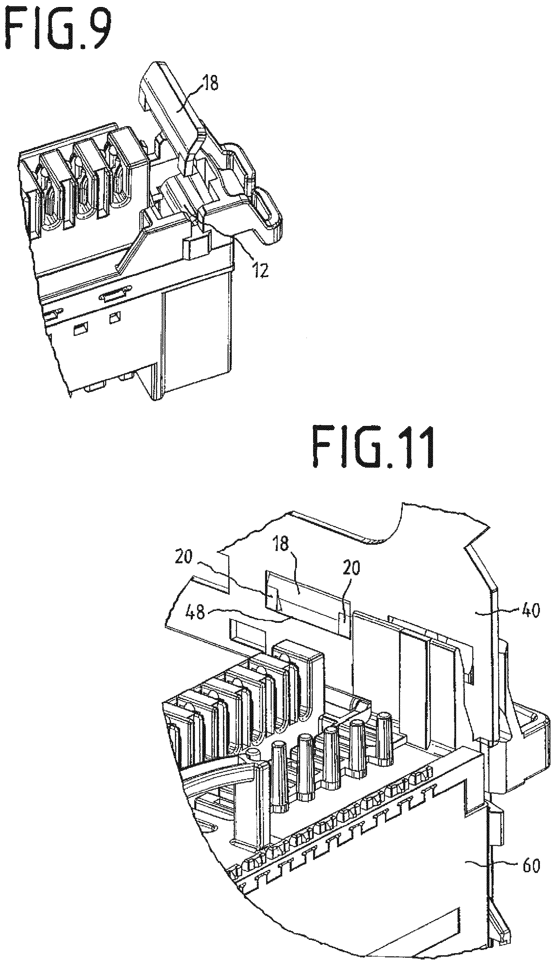

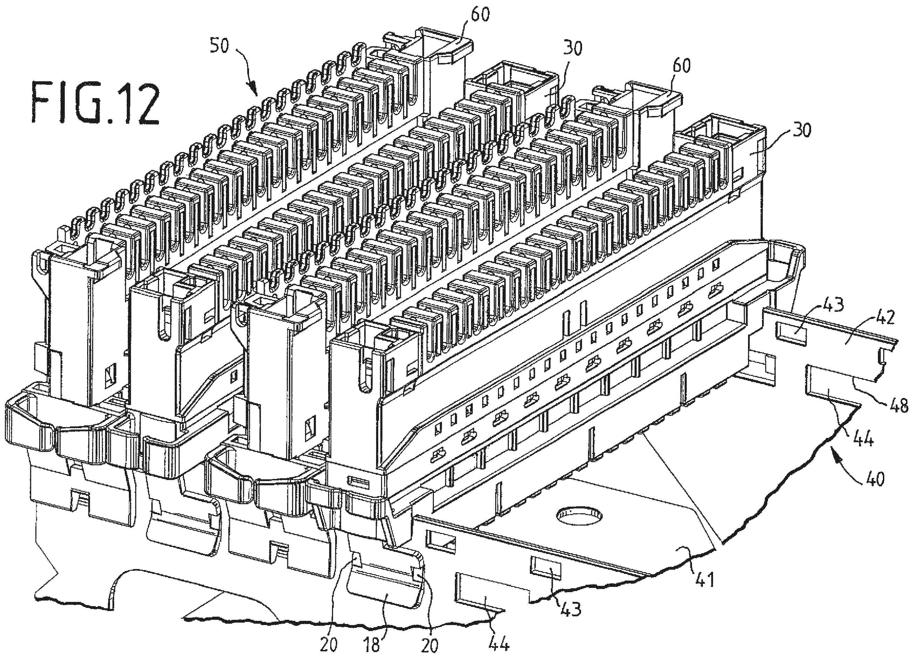

In den Fig. 7a, 7b bis 12 ist eine zweite Ausführungsform des Erdungsadapters 10 dargestellt, wobei gleiche Elemente wie in den Fig. 1 bis 6 mit gleichen Bezugszeichen versehen sind. Der wesentliche Unterschied des Erdungsadapters 10 gemäß Fig. 7a, 7b ist, dass dieser keine Halteelemente 21 aufweist. Dafür werden die Erdungsadapter 10 derart in das Verteileranschlussmodul 30 gesteckt, dass die Wölbungen der Laschen 18 nach innen gerichtet sind (siehe auch Fig. 8 und 9). Wird dann das Verteileranschlussmodul 30 auf die Montagewanne 40 gesteckt, so drückt sich das Klemmelement 13 bzw. die Lasche 18 von der Außenseite 46 in die Öffnung 44, wobei sich das Mittelteil 12 wieder an dem Verteileranschlussmodul 30 abstützt. Der Vorteil dieser Ausführungsform ist, dass unterhalb des Verteileranschlussmoduls 30 kein Bauraum für den Erdungsadapter 10 benötigt wird, der bei bestimmten Bauformen der Verteileranschlussmodule 30 nicht vorhanden ist. Abschließend sei angemerkt, dass die Breite B (siehe Fig. 1b) der Klemmelemente 13 bzw. der Laschen 18 unter Berücksichtigung von Fertigungstoleranzen der Breite b (siehe Fig. 6) der Öffnungen 44 entspricht.

### Bezugszeichenliste

- 10: Erdungsadapter
- 11: Kontaktzunge
- 12: Mittelteil
- 13: Klemmelement
- 14: Öffnung
- 15: Grundöffnung
- 16: Öffnung
- 17: Anschlagkante
- 18: Lasche
- 19: Einschnitt
- 20: Flügel
- 21: Halteelement
- 30: Verteileranschlussmodul
- 31: Stirnseite
- 32: Rastelement
- 40: Montagewanne
- 41: Rückwand
- 42: Seitenwand
- 43: Öffnung
- 44: Öffnung
- 45: Stirnseite
- 46: Außenseite
- 47: Innenseite
- 48: Oberkante
- 50: Verteilerblock
- 60: Verteileranschlussmodul
- B: Breite
- b: Breite

## Patentansprüche

1. Verteilerblock (50) für die Telekommunikations- und Datentechnik, der ein Trägersystem in Form einer Montagewanne (40) mit zwei Seitenwänden (42) und einer Rückwand (41) und mindestens ein Verteileranschlussmodul (30) aufweist, wobei das Verteileranschlussmodul (30) Einsteckkanäle aufweist,
die Seitenwände (42) der Montagewanne (40) jeweils mindestens eine Reihe von rechteckförmigen Öffnungen (44) aufeisen, wobei die der Rückwand (41) abgewandten Stirnseiten (45) der Seitenflächen (42) gerade sind, wobei je Verteileranschlussmodul (30) zwei Erdungsadapter (10) vorgesehen sind, wobei der jeweilige Erdungsadapter (10) jeweils eine Kontaktzunge (11) und ein Klemmelement (13) aufweist, wobei die Kontaktzunge (11) in einem der Einsteckkanäle des Verteileranschlussmoduls (30) geführt ist und das Klemmelement (13) in einer der rechteckförmigen Öffnungen (44) einer der Seitenwände (42) geklemmt ist, **dadurch gekennzeichnet, dass** das Klemmelement eine gebogene Lasche (18) mit zwei Einschnitten (19) umfasst, wodurch zwei Flügel (20) freigeschnitten sind, die Anschlagkanten an einer Oberkante (48) der Öffnung (44) bilden.

2. Verteilerblock nach Anspruch 2, **dadurch gekennzeichnet, dass** das Klemmelement (13) von der Innenseite (47) oder von der Außenseite (46) der Seitenwand (42) in die Öffnung (44) geklemmt ist.

3. Verteilerblock nach Anspruch 2, **dadurch gekennzeichnet, dass** das Klemmelement (13) von der Innenseite (47) in die Öffnung (44) der Seitenwand (42) geklemmt ist, wobei der Erdungsadapter (10) mindestens ein weiteres Halteelement (21) aufweist, das an der Außenseite (46) der Seitenwand anliegt.

4. Verteilerblock nach einem der vorangegangenen Ansprüche, **dadurch gekennzeichnet, dass** die Breite (B) des Klemmelements (13) der Breite (b) der Öffnung (44) in der Seitenwand (42) entspricht.

5. Verteilerblock nach einem der vorangegangenen Ansprüche, **dadurch gekennzeichnet, dass** die Kontaktzunge (11) eine Öffnung (14) aufweist, in der ein Rastelement (32) in dem Einsteckkanal des Verteileranschlussmoduls (30) einrastet.

6. Verteilerblock nach Anspruch 5, **dadurch gekennzeichnet, dass** die Öffnung (14) eine rechteckförmige Grundöffnung (15) aufweist, an die sich unmittelbar eine weitere schmalere rechteckförmige Öffnung (16) anschließt, sodass sich eine Anschlagkante (17) für ein Rastelement (32) in einem Einsteckkanal des Verteileranschlussmoduls (30) ausbildet.

7. Verteilerblock nach einem der vorangegangenen Ansprüche, **dadurch gekennzeichnet, dass** zwischen der Kontaktzunge (11) und dem Klemmelement (13) ein gebogenes Mittelteil (12) angeordnet ist, das eine Abstützfläche auf dem Verteileranschlussmodul (30) ausbildet.

## Claims

1. A distributor block (50) for telecommunication technology and data technology, which has a support system in the form of a mounting frame (40) with two lateral walls (42) and a rear wall (41), and at least one distributor connection module (30), said distributor connection module (30) having plug-in channels,
each of the lateral walls (42) of the mounting frame (40) having at least one row of rectangular openings (44), wherein the end faces (45), facing away from the rear wall (41), of the lateral faces (42) are straight, wherein each distributor connection module (30) is provided with two grounding adapters (10), wherein each respective grounding adapter (10) has a contact tongue (11) and a clamping element (13), wherein the contact tongue (11) is guided in one of the plug-in channels of the distributor connection module (30) and the clamping element (13) is clamped in one of the rectangular openings (44) in one of the lateral walls (42), **characterised in that** the clamping element comprises a bent tab (18) with two incisions (19), as a result of which two wings (20) are cut free, which form limit stop edges at an upper edge (48) of the opening (44).

2. The distributor block according to claim 2, **characterised in that** the clamping element (13) is clamped into the opening (44) from the inside (47) or from the outside (46) of the lateral wall (42).

3. The distributor block according to claim 2, **characterised in that** the clamping element (13) is clamped from the inside (47) into the opening (44) in the lateral wall (42), wherein the grounding adapter (10) has at least one further retaining element (21), which rests against the outside (46) of the lateral wall.

4. The distributor block according to any one of the preceding claims, **characterised in that** the width (B) of the clamping element (13) corresponds to the width (b) of the opening (44) in the lateral wall (42).

5. The distributor block according to any one of the preceding claims, **characterised in that** the contact tongue (11) has an opening (14) in which a latching element (32) latches into the plug-in channel of the distributor connection module (30).

6. The distributor block according to claim 5, **characterised in that** the opening (14) has a rectangular main opening (15), which is directly adjoined by a further, narrower rectangular opening (16), so as to form a limit stop edge (17) for a latching element (32) in a plug-in channel of the distributor connection module (30).

7. The distributor block according to any one of the preceding claims, **characterised in that** a bent central portion (12), forming a surface for resting against the distributor connection module (30), is arranged between the contact tongue (11) and the clamping element (13).

## Revendications

1. Bloc de distribution (50) pour la technique des télécommunications et du traitement des données, qui comprend un système de support sous la forme d'une cuve de montage (40) avec deux parois latérales (42) et une paroi arrière (41) et au moins un module de raccordement de distribution (30), dans lequel le module de raccordement de distribution (30) comprend des canaux d'enfichage,
les parois latérales (42) de la cuve de montage (40) comprennent respectivement au moins une série d'ouvertures rectangulaires (44), dans lequel les faces frontales (45) des surfaces latérales (42) opposées à la paroi arrière (41) sont droites, dans lequel deux adaptateurs avec prise de terre (10) sont prévus pour chaque module de raccordement de distribution (30), dans lequel l'adaptateur avec prise de terre (10) respectif comprend respectivement une languette de contact (11) et un élément de serrage (13), dans lequel la languette de contact (11) est guidée dans l'un des canaux d'enfichage du module de raccordement de distribution (30) et l'élément de serrage (13) est serré dans l'une des ouvertures rectangulaires (44) de l'une des parois latérales (42), **caractérisé en ce que** l'élément de serrage comporte une patte courbe (18) avec deux entailles (19), de sorte que deux ailettes (20) sont découpées et forment des bords de butée au niveau d'un bord supérieur (48) de l'ouverture (44).

2. Bloc de distribution selon la revendication 2, **caractérisé en ce que** l'élément de serrage (13) est serré depuis la face interne (47) ou depuis la face externe (46) de la paroi latérale (42) dans l'ouverture (44).

3. Bloc de distribution selon la revendication 2, **caractérisé en ce que** l'élément de serrage (13) est serré depuis la face interne (47) dans l'ouverture (44) de la paroi latérale (42), dans lequel l'adaptateur avec prise de terre (10) comprend au moins un autre élément de maintien (21) qui repose sur la face externe (46) de la paroi latérale.

4. Bloc de distribution selon l'une des revendications précédentes, **caractérisé en ce que** la largeur (B) de l'élément de serrage (13) correspond à la largeur (b) de l'ouverture (44) dans la paroi latérale (42).

5. Bloc de distribution selon l'une des revendications précédentes, **caractérisé en ce que** la languette de contact (11) comprend une ouverture (14) dans laquelle un élément d'encliquetage (32) s'encliquette dans le canal d'enfichage du module de raccordement de distribution (30).

6. Bloc de distribution selon la revendication 5, **caractérisé en ce que** l'ouverture (14) comprend une ouverture de base rectangulaire (15) à laquelle se raccorde directement une autre ouverture rectangulaire plus étroite (16), de sorte qu'un bord de butée (17) pour un élément d'encliquetage (32) se forme dans un canal d'enfichage du module de raccordement de distribution (30).

7. Bloc de distribution selon l'une des revendications précédentes, **caractérisé en ce qu'**une pièce intermédiaire courbée (12) est disposée entre la languette de contact (11) et l'élément de serrage (13), ladite pièce intermédiaire courbée constituant une surface d'appui sur le module de raccordement de distribution (30).
